Europäisches Patentamt

European Patent Office

Office européen des brevets

(11) Publication number: **0 433 013 A2**

## EUROPEAN PATENT APPLICATION

(21) Application number: 90313435.1

(22) Date of filing: 11.12.90

(51) Int. Cl.⁵: **G05B 19/42**

(30) Priority: 15.12.89 JP 324992/89

(43) Date of publication of application:
19.06.91 Bulletin 91/25

(84) Designated Contracting States:
**DE FR GB**

(71) Applicant: **SONY CORPORATION**
**7-35 Kitashinagawa 6-Chome Shinagawa-ku**
**Tokyo 141(JP)**

(72) Inventor: **Maruyama, Kazuo, Patents Division**
**c/o Sony Corporation, 6-7-35 Kitashinagawa**
**Shinagawa-ku, Tokyo(JP)**
Inventor: **Kuragano, Tetsuzo, Patents Division**
**c/o Sony Corporation, 6-7-35 Kitashinagawa**
**Shinagawa-ku, Tokyo(JP)**

(74) Representative: **Thomas, Christopher Hugo et**
**al**
**D Young & Co 10 Staple Inn**
**London WC1V 7RD(GB)**

(54) Methods of inputting three-dimensional configuration data.

(57) A method of inputting three-dimensional configuration data in which an object (3) to be measured which has been processed so as not substantially to reflect a measuring beam is processed at a desired portion to be measured so as to reflect the measuring beam, whereby three-dimensional configuration data of the desired portion to be measured of the object (3) to be measured can be inputted at a high accuracy by using an optical three-dimensional configuration measuring system (1).

FIG.2

## METHODS OF INPUTTING THREE-DIMENSIONAL CONFIGURATION DATA

This invention relates to methods of inputting three-dimensional configuration data. Methods in accordance with the invention are particularly, but not exclusively, suitable where three-dimensional configuration data for use in computer aided design (CAD) or computer aided manufacture (CAM) are inputted by an optical three-dimensional configuration measuring system.

In designing a configuration of an object with free surfaces by means of a technique such as CAD, the designer first makes a model or mock-up, representing a desired object, and then three-dimensional configuration data of the model are inputted into a CAD system by a three-dimensional configuration measuring device. Design processing can then be performed by the CAD system on the basis of the three-dimensional configuration data, and thereby the configuration of the desired object can be designed with higher efficiency than if an object is designed only by the CAD system.

Among three-dimensional configuration measuring systems, there is a system in which an optical curved surface configuration measuring technique based on the principle of trigonometrical survey is used.

In the usual optical three-dimensional configuration measuring system, the so-called light-section technique is used, in which an object to be measured is scanned by a slitted beam. This state is picked up by a television camera. Lattice coordinates are set on a plane perpendicular to the line of sight of the camera, and as a result, three-dimensional configuration data are obtained as image data in which height data of the object are plotted according to each coordinate.

However, the three-dimensional configuration data which have been inputted to a CAD system in this manner are data representing uniform mesh-like coordinates irrespective of the configuration of the object to be measured. Thus, to improve the accuracy of measurement it is necessary to measure a configuration of the object with a large density of coordinates. This results in an enormous amount of data.

When the amount of data becomes enormous, it is hard to input them into the CAD system. Moreover, when the density of the mesh-like coordinates are set smaller for enabling data to be inputted to the CAD system, it is likely that characteristic portions (so-called characteristic lines) of a configuration at which the designer aims are not exactly expressed as data. Thus, it is not easy to extract characteristic lines effective for the design operation of the designer, and this may result in decreased efficiency of use of the CAD system.

According to the present invention there is provided a method of inputting three-dimensional configuration data, in which three-dimensional configuration data of an object to be measured are obtained by an optical three-dimensional configuration measuring system, the method including the steps of:

processing said object such that said object does not substantially reflect a measuring beam;

subsequently processing said object at a desired portion to be measured thereof so as to reflect said measuring beam; and

measuring three-dimensional configuration data of said object by said measuring system.

In a method according to the invention in which three-dimensional configuration data of an object to be measured are obtained by an optical three-dimensional configuration measuring system, the object to be measured is processed in such a fashion that the object to be measured does not substantially reflect measuring beams, and thereafter the object to be measured is processed at a desired portion to be measured thereof so as to reflect the measuring beams.

An object to be measured which has been processed not substantially to reflect measuring beams is processed at a desired portions to be measured so as to reflect measuring beams, whereby three-dimensional configuration data of the desired portion of the object to be measured, at which a designer aims, can be inputted at a both necessary minimum and a high accuracy by using an optical three-dimensional configuration measuring system.

The invention will now be described by way of example with reference to the accompanying drawings, throughout which like parts are referred to by like references, and in which:

Figure 1 is a flow chart illustrating a three-dimensional configuration data inputting method according to the present invention;

Figure 2 is a diagrammatic view showing the optical three-dimensional configuration measuring system which is used in the method;

Figures 3 and 4 are diagrammatic views illustrating the inputting of three-dimensional configuration data; and

Figure 5 is diagrammatic illustrating generation of CAD data.

Structure of the optical three-dimensional configuration measuring system

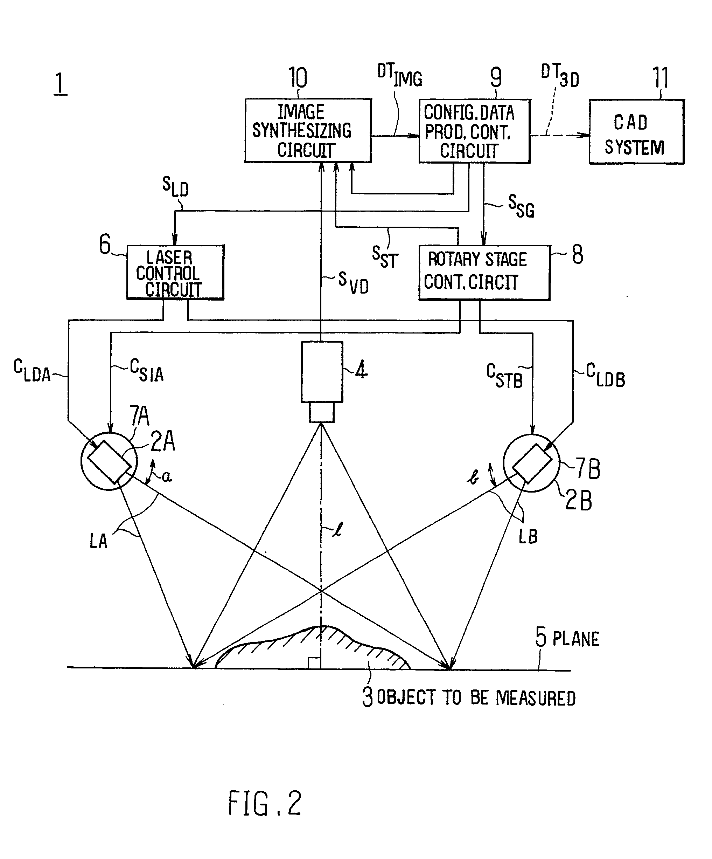

In Figure 2, there is shown an optical three-dimensional configuration measuring system 1 using a method of inputting three-dimensional configuration data according to the present invention, in which measuring beams LA and LB are irradiated on an object 3 to be measured from first and second slit light sources 2A and 2B by so-called light-section technique, so that mesh-like bright lines irradiated on the object 3 to be measured are picked up by a charge coupled device (CCD) camera 4. According to luminance information of each portion of these bright lines, three-dimensional configuration data can be measured.

The CCD camera 4 is arranged so that the lens optical axis 1 thereof is normal to a plane 5 on which the object 3 to be measured is mounted. The slit light sources 2A and 2B are disposed at respective positions equal in distance from both the CCD camera 4 and the plane 5, and symmetrical about the lens optical axis 1.

The slit light sources 2A and 2B are energised to emit light beams according to the laser control signals $C_{LDA}$ and $C_{LDB}$ inputted from a laser control circuit 6. The slit light sources 2A and 2B are mounted on respective rotary stages 7A and 7B and are controlled to turn through angles as indicated by arrows a and b in accordance with rotary stage control signals $C_{STA}$ and $C_{STB}$ from a rotary stage control circuit 8. In this manner, mesh-like bright lines are irradiated on the object 3 to be measured by the measuring beams LA and LB which are slit laser beams.

In practise, the laser control circuit 6 and the rotary stage control circuit 8 are actuated in response to a laser control signal $S_{LD}$ and a beam emitting angle control signal $S_{SG}$ inputted from a configuration data production control circuit 9 which consists of a computer, respectively. The rotary stage control circuit 8 sends beam emitting angle signals $S_{ST}$, representing beam emitting angles of the rotary stages 7A and 7B, to an image synthesizing circuit 10.

The image synthesizing circuit 10 performs an image synthesizing processing according to a video signal $S_{VD}$, obtained from the CCD camera 4, and the beam emitting angle control signal $S_{SG}$ from the rotary stage control circuit 8, and the resulting synthesized image data $DT_{IMG}$ is transmitted to the configuration data production control circuit 9.

Thus, the configuration data production control circuit 9 produces three-dimensional configuration data $DT_{3D}$ on the basis of the synthesized image data $DT_{IMG}$ and sends it to a CAD system 11.

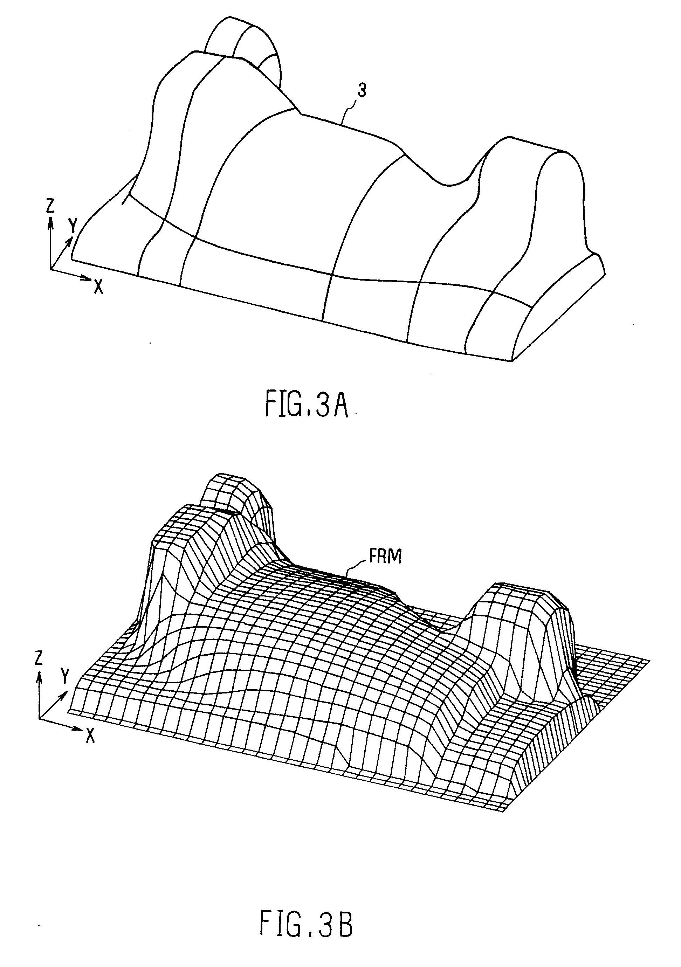

Here, the object 3 to be measured which has an outer shape as shown in Figure 3A is measured by the measuring system 1. The object 3 is displayed as a wire frame FRM as shown in Figure 3B by inputting resulting three-dimensional configuration data $DT_{3D}$ to the CAD system 11 and at the same time by producing spline curves which pass each at the measuring points which are intersections of mesh-like bright lines.

## A three-dimensional configuration data inputting method

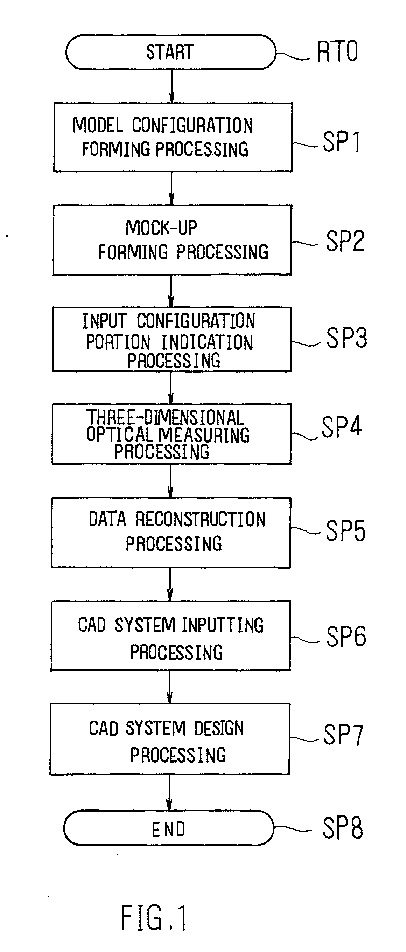

In this method, a three-dimensional configuration data inputting routine RTO as shown in Figure 1 is executed, and thereby three-dimensional configuration data $DT_{3DO}$ of configurations of portions, such as characteristic lines the designer particularly wishes to input, of the object 3 to be measured are obtained by the optical three-dimensional configuration measuring system 1.

More specifically, the three-dimensional configuration data inputting routine RTO uses the fact that the optical three-dimensional configuration measuring is impossible since no luminance information in any video signal obtained from the CCD camera 4 is detected when no measuring beams LA and LB are substantially reflected, as in a black object and a black surface. A model such as a mock-up is previously processed not substantially to reflect measuring beams LA and LB while selected portions of the mock-up are made so as to reflect the measuring beams LA and LB, the designer wishing to obtain the configurations of these selected portions. Then, three-dimensional configuration data $DT_{3DO}$ are obtained in the usual way by the measuring system 1.

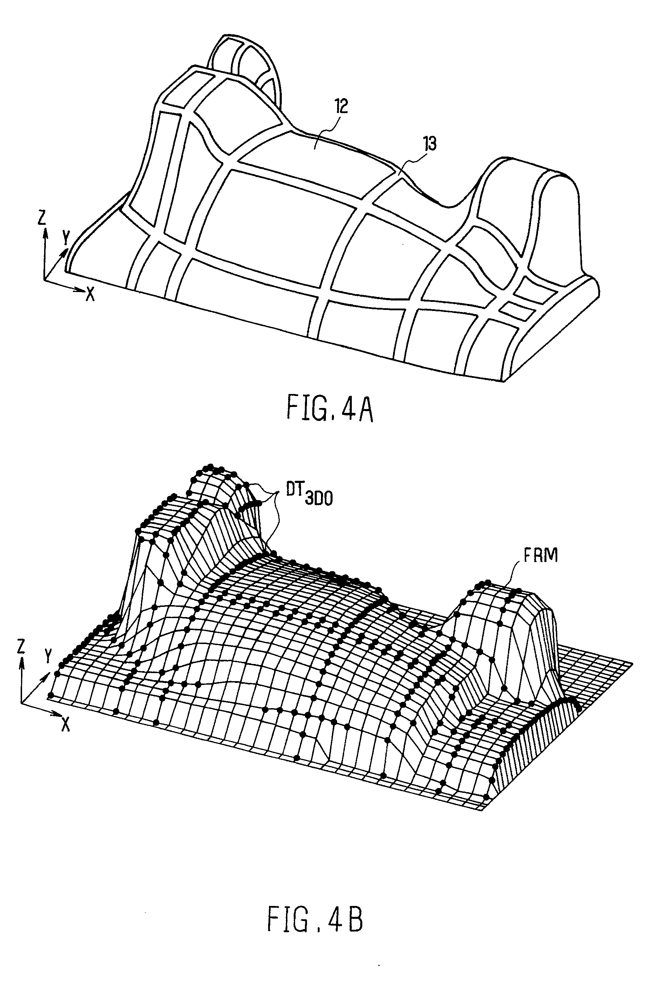

In practice, the designer enters the three-dimensional configuration data inputting routine RTO, in which: in a step SP1 there is carried out a process of producing a configuration of a model, such as a mock-up, representing an object to be designed; and then in a next step SP2, a black mock-up 12 is made of an object to be measured, which has an outer shape as shown in Figure 4A, formed of black famed polyurethane or like material, for example. The mock-up is made on the basis of the configuration or shape of the model produced in step SP1.

Then, in a step SP3 the designer prepares the mock-up 12 in such a manner that white colour markings 13 are carried out as shown in Figure 4A, by applying a white paint or adhering a white tape to configuration portions, such as characteristic lines, which are particularly desired to be inputted.

Subsequently, the designer arranges the mock-up 12 within the measuring system 1 and then three-dimensional optical measuring processing is executed in step SP4.

In this way, the configuration data production control circuit 9 of the optical three-dimensional configuration measuring system 1 extracts only data corresponding to the white colour markings 13 prepared in the step SP3, among the inputted synthesized image data $DT_{IMG}$.

In addition, in the next step SP5, the configuration data production control circuit 9 obtains three-dimensional configuration data $DT_{3DO}$ from synthesized image data $DT_{IMG1}$, as the result of the above extraction, and at the same time deletes data about areas except the white colour markings 13 as unnecessary data.

The three-dimensional configuration data $DT_{3DO}$ which are obtained by the measuring system 1 in this manner can be expressed by intersecting lines on the above-described wire frame FRM (Figure 3b) as shown in Figure 4B, and it will be understood that the three-dimensional configuration data $DT_{3DO}$ contain necessary minimum data including characteristic lines the designer wishes to have.

Hence, the designer can input the three-dimensional configuration data $DT_{3DO}$ to the CAD system 11 with ease in a next step SP6.

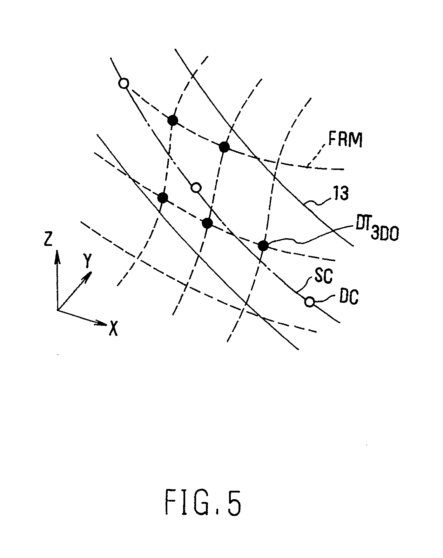

In a subsequent step SP7, the designer indicates new dot data DC as shown in Figure 5 at intersections of the wire frame lines using the three-dimensional configuration data $DT_{3DO}$ inputted to the CAD system 11, and by performing an operation connecting these, space curves SC, which are expressed by a spline function and a Bejier equation, for example, are generated as shown by the dot-and-dash line in Figure 5.

From the space curves SC obtained in this manner, the designer can produce free curved surfaces-as disclosed in Japanese patent applications 60/277448 and 60/290849. A design operation can be performed by deforming the configuration of the model from the free curved surfaces according to need, or curved surface processed data can be produced by using the free curved surface data obtained by this design operation. The three-dimensional configuration data inputting routine RTO is completed in a next step SP8.

Thus, a three-dimensional configuration data inputting method which includes the free curved surface producing technique, etc. and which is suitable for a three-dimensional CAD system is achieved by simple procedures in which the mock-up is formed of a black foamed polyurethane or the like, and the white marking is applied to portions of configurations to be inputted.

In the above method, the case in which the mock-up is formed of black foamed polyurethane or the like is explained. However, not only a mock-up but also other models to be measured may alternatively be formed of a transparent material, and a non-reflective coating may be applied. Alternatively, a satin surface treatment may be applied by a black paint. Then the lines of intersection are formed as dark lines on the mock-up.

In the above method, the system of a structure as shown in Figure 2 is used as the optical three-dimensional configuration measuring system. The present invention is not limited to this system and may be widely applied to a system which measures optically a three-dimensional configuration in a non-contact manner using a CCD camera or a television camera.

The present invention is not restricted to CAD system inputting, and may be widely applied to a case wherein three-dimensional configuration data for a computer graphics system or the like system are inputted.

## Claims

1. A method of inputting three-dimensional configuration data, in which three-dimensional configuration data of an object (3) to be measured are obtained by an optical three-dimensional configuration measuring system (1), the method including the steps of:

   processing said object (3) such that said object (3) does not substantially reflect a measuring beam;

   subsequently processing said object (3) at a desired portion to be measured thereof so as to reflect said measuring beam; and

   measuring three-dimensional configuration data of said object (3) by said measuring system (1).

2. A method according to claim 1 wherein said object (3) to be measured is a mock-up (12) formed of black material and having the configuration of a model to be designed, and including the step of applying a white coating (13) or adhering a white tape to said desired portion to be measured of said mock-up (12).

```
              ┌─────────────────┐
              │      START      │────── RT0
              └─────────────────┘
                       │
                       ▼
              ┌─────────────────┐
              │ MODEL CONFIGURATION │──── SP1
              │ FORMING PROCESSING  │
              └─────────────────┘
                       │
                       ▼
              ┌─────────────────┐
              │     MOCK-UP     │────── SP2
              │ FORMING PROCESSING │
              └─────────────────┘
                       │
                       ▼
              ┌─────────────────┐
              │ INPUT CONFIGURATION │──── SP3
              │ PORTION INDICATION  │
              │    PROCESSING       │
              └─────────────────┘
                       │
                       ▼
              ┌─────────────────┐
              │ THREE-DIMENSIONAL   │──── SP4
              │ OPTICAL MEASURING   │
              │    PROCESSING       │
              └─────────────────┘
                       │
                       ▼
              ┌─────────────────┐
              │ DATA RECONSTRUCTION │──── SP5
              │    PROCESSING       │
              └─────────────────┘
                       │
                       ▼
              ┌─────────────────┐
              │ CAD SYSTEM INPUTTING │── SP6
              │    PROCESSING        │
              └─────────────────┘
                       │
                       ▼
              ┌─────────────────┐
              │ CAD SYSTEM DESIGN   │──── SP7
              │    PROCESSING       │
              └─────────────────┘
                       │
                       ▼
              ┌─────────────────┐
              │      END        │────── SP8
              └─────────────────┘
```

FIG.1

FIG.2

FIG.3A

FIG.3B

FIG.4A

FIG.4B

FIG.5